# EUROPÄISCHE PATENTSCHRIFT

(11) **EP 0 813 465 B1**
(45) Veröffentlichungstag und Bekanntmachung des Hinweises auf die Patenterteilung: **12.06.2002**
(21) Anmeldenummer: 96905797.5
(22) Anmeldetag: 26.02.1996
(51) Int. Cl.: B23Q 11/08

(54) **TELESKOPABDECKUNG**
TELESCOPIC COVERING
CAPOT TELESCOPIQUE

(30) Priorität: 08.03.1995 DE 19508266
(43) Veröffentlichungstag der Anmeldung: 29.12.1997
(73) Patentinhaber: Kabelschlepp Gesellschaft mit beschränkter Haftung, 57074 Siegen (DE)
(72) Erfinder: WEHLER, Herbert, D-57290 Neunkirchen (DE); MÜLLER, Roland, 57076 Siegen (DE)
(74) Vertreter: Kahlhöfer, Hermann, Dipl.-Phys.
(86) Internationale Anmeldenummer: EP9600779
(87) Internationale Veröffentlichungsnummer: WO9627478

(56) Entgegenhaltungen:
- DE-A- 4 214 118
- US-A- 4 860 917
- US-A- 5 119 869

## Beschreibung

Die Erfindung bezieht sich auf eine Abdeckung für ein Maschinenbett einer Werkzeugmaschine mit teleskopartig ineinander schiebbaren Abdeckkästen mit den Merkmalen des Obergriffs des Anspruchs 1.

Durch die DE 40 26 609 C1 ist ein Abdeckkasten für teleskopartig verlänger- und verkürzbare Abdeckungen von Führungsbahnen an Werkzeugmaschinen bekannt. Der Abdeckkasten weist eine Oberwand und zwei rechtwinklig zur Oberwand angeordneten Seitenwände, die mitteloder unmittelbar mit einer Kastenstirnwand verbunden sind. Der Abdeckkasten weist ferner über die Seitenwände nach außen hervorragende, an der Stirnwand angeordneten Mitnehmer für den nächstgrößeren, entsprechende Gegenmitnehmer aufweisenden, Abdeckkasten auf. Jede Seitenwand besitzt an ihrer der Kastenstirnwand benachbarten Kante einen Längseinschnitt oder einen Längsschlitz, durch den das vordere Ende des mit der Stirnwand demontierbar verbundenen Mitnehmers in der Form eines Riegels ragt. Der Abdeckkasten ist aus einem einteiligen Blechzuschnitt hergestellt. Um die Mitnehmer in der Form eines Riegels mit dem Kasten zu verbinden, sind die Längseinschnitte oder Längsschlitze notwendig.

Der Herstellungsaufwand eines solchen Abdeckkastens mit einem Riegel ist relativ aufwendig. Um sicherzustellen, daß die Kastenstirnwand, an welcher der Mitnehmer angebracht ist, durch die beim Verschieben der Kästen entstehenden Kräfte nicht aufgebogen wird, ist es durch die DE 40 26 609 C1 bekannt, die Stirnwand mit den Seitenwänden zu verschweißen. Der Verschweißvorgang muß mit großer Sorgfalt ausgeführt werden, da durch die beim Schweißen entstehende Wärme ein Verziehen des Abdeckkastens zur Folge haben kann. Ein solches Verziehen des Abdeckkastens kann nicht völlig ausgeschlossen werden, so daß ein nachträgliches Richten des Abdeckkastens notwendig ist.

Durch die DE 42 14 118 A1 ist eine Abdeckung für ein Maschinenbett einer Werkzeugmaschine mit teleskopartig ineinanderschiebbaren Kästen mit den Merkmalen des Oberbegriffs des Anspruchs 1 bekannt. Jeder Abdeckkasten weist eine erste und eine zweiten Seitenwand und eine mit den Seitenwänden verbundene Oberwand auf. Die Abdeckkästen weisen einen über eine Seitenwand nach außen hervorragenden Mitnehmer auf, der mit einem entsprechenden Gegenmitnehmer des nächsten größeren Abdeckkastens zusammenwirkt. Der Mitnehmer, bzw. der Gegenmitnehmer, sind einstückig mit den entsprechenden Wänden ausgebildet.

Ausgehend von diesem Stand der Technik liegt der Erfindung die Aufgabe zugrunde, die Herstellung einer Abdeckung für ein Maschinenbett einer Werkzeug maschine mit teleskopartig ineinander schiebbaren Abdeckkästen zu vereinfachen. Diese Aufgabe wird erfindungsgemäß durch eine Abdeckung eines Maschinenbetts einer Werkzeugmaschine mit den Merkmalen des Anspruchs 1 gelöst. Vorteilhafte Weiterbildungen sind Gegenstand der Unteransprüche.

Die erfindungsgemäße Abdeckung für ein Maschinenbett einer Werkzeugmaschine mit teleskopartig ineinander schiebbaren Ketten zeichnet sich dadurch aus, daß der Mitnehmer an einem Mitnehmerprofil ausgebildet ist. Das Mitnehmerprofil weist wenigstens an der an der Seitenwand anliegenden Fläche eine sich in Längsrichtung des Mitnehmerprofils erstreckende, wenigstens an einer Stirnseite des Mitnehmerprofils offene T-förmige Nut mit Absätzen auf. Das Mitnehmerprofil ist mit der Seitenwand verschraubt, wobei ein Kopf einer Schraube oder eine Mutter auf den Absätzen der Nut liegt.

Der Vorteil der T-förmigen Nut kann darin gesehen werden, daß unabhängig von der Lage der Bohrungen in der Seitenwand eine Verbindung mit dem Mitnehmerprofil hergestellt werden kann. Durch die Verschraubung des Mitnehmerprofils mit der Seitenwand werden die beim Verschieben der Abdeckkästen auf den Mitnehmer einwirkenden Kräfte in die Seitenwand übertragen. Die Einleitung der Kräfte in die Seitenwand hat den Vorteil, daß eine Verformung des Abdeckkastens nicht oder nur in einem sehr geringen Maße eintritt.

Vorteilhafterweise weist der Mitnehmer ein Dämpfungselement auf, welches auf der Mitnehmerfläche angeordnet ist. Durch das Dämpfungselement wird der beim Verschieben entstehende Stoß zwischen dem Mitnehmer und dem Gegenmitnehmer zweier Kästen abgedämpft. Desweiteren wird der durch den Stoß entstehende Krach reduziert. Dies ist insbesondere von Bedeutung, da solche Abdeckungen wie Resonanzkörper wirken.

Es wird vorgeschlagen, das Mitnehmerprofil mit einer Nut zur Aufnahme des Dämpfungselementes zu versehen. Die Nut ist vorzugsweise in der Mitnehmerfläche ausgebildet. Die Ausbildung der Nut hat den Vorteil, daß eine einfache Verbindung des Dämpfungselementes mit dem Mitnehmerprofil erzielt wird. Desweiteren kann in einfacher Art und Weise ein Austausch des Dämpfungselementes erfolgen. Bevorzugt wird ein Dämpfungselement, welches aus Filz besteht. Auch andere Werkstoffe für Dämpfungselemente sind möglich. Hierbei sollte jedoch berücksichtigt werden, daß das Dämpfungselement durch die auftretenden Stöße nicht soweit gequetscht wird, daß deren Dämpfungswirkung verloren geht.

Zur weiteren Vereinfachung der Herstellung eines Abdeckkastens wird vorgeschlagen, die Rückwand des Abdeckkastens mit dem Mitnehmerprofil zu verbinden. Die Rückwand kann als ein gesondertes Teil ausgebildet sein. Die Verbindung der Rückwand mit dem Mitnehmerprofil kann durch Verschrauben oder desgleichen erfolgen. Hierzu wird vorgeschlagen, das Mitnehmerprofil in der an der Rückwand anliegenden Fläche mit einer sich in Längsrichtung des Mitnehmerprofils erstreckenden, wenigstens an einer Stirnseite offenen, T-förmigen Nut auszubilden.

Beim Ineinanderschieben der Abdeckkästen der Abdeckung kommt das Profil eines Kastens zur Anlage an das Profil oder die Rückwand des nächstgrößeren Kastens. Um die beim Zusammenschieben der Abdeckkästen entstehenden Stöße und den damit verbundenen Lärm zu verhindern, wird vorgeschlagen, wenigstens einen Anschlag an dem Mitnehmerprofil anzuordnen, wobei der Anschlag mit einem Mitnehmerprofil oder einer Rückwand des nächstgrößeren Abdeckkastens in Kontakt bringbar ist. Der Anschlag kann, wie das Dämpfungselement, aus Filz bestehen. Der Anschlag als solcher dämpft die Stöße zwischen zwei Abdeckkästen, die ineinandergeschoben werden. Ferner wird durch den Anschlag der beim Zusammenschieben zweier Kästen entstehende Lärm vermindert. Bei dem Anschlag kann es sich um ein Anschlagprofil handeln, welches in eine im Mitnehmerprofil ausgebildeten Anschlagnut eingreift. Die Anschlagnut kann T-förmig oder schwalbenschwanz-förmig ausgebildet sein.

Das Mitnehmerprofil kann soweit vorbereitet sein, daß es bereits mit einem Dämpfungselement und einem Anschlag versehen wird. Soll der Abdeckkasten eine Rückwand umfassen, so können diese einzelnen Teile bereits mit dem Mitnehmerprofil als bauliche Einheit vorbereitet werden und anschließend mit dem Abdeckkasten verbunden werden. Hierdurch wird die Montagezeit eines Abdeckkastens verringert. Bei dem Gegenmitnehmer handelt es sich vorzugsweise um eine an eine Seitenwand angeordneten Leiste. Die Leiste besteht vorzugsweise aus Messing.

Weitere Merkmale und Vorteile der erfindungsgemäßen Abdeckung werden anhand der in der Zeichnung dargestellten Ausführungsbeispiele erläutert. Es zeigen:
- Figur 1: schematisch in einer perspektiven Darstellung eine Abdekkung,
- Figur 2.: ein erstes Ausführungsbeispiel eines Abdeckkastens im Schnitt,
- Figur 3: ein zweites Ausführungsbeispiel eines Abdeckkastens im Schnitt,
- Figur 4: im Längsschnitt ein Profil mit einer Rinne und

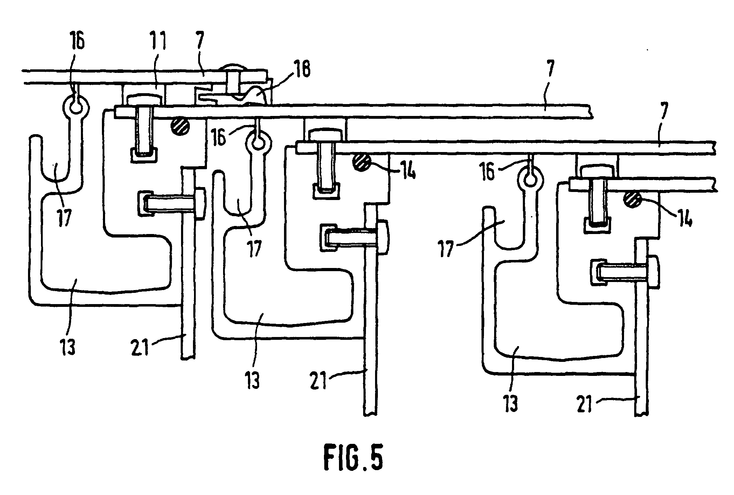

- Figur 5: ein zweites Ausführungsbeispiel einer im Profil ausgebildeten Rinne im Längsschnitt.

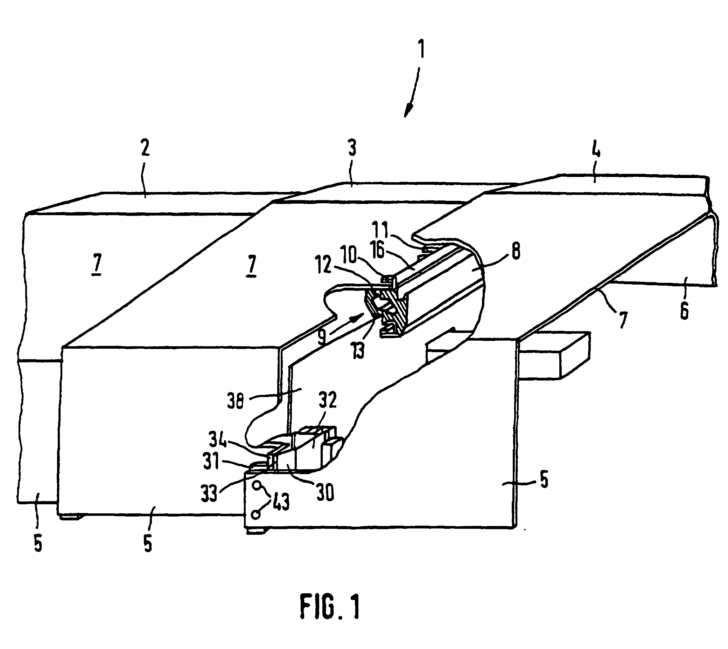

In der Figur 1 ist schematisch eine Abdeckung 1 respektivisch dargestellt. Die Abdeckung 1 umfaßt teleskopartig ineinanderschiebbare Abdeckkästen 2, 3, 4. Jeder Abdeckkasten 2, 3, 4 weist eine erste und eine zweite Seitenwand 5, 6 auf. Mit den Seitenwänden 5, 6 ist eine Oberwand 7 verbunden, welche spitzdach-förmig ausgebildet ist. Die Seitenwände 5, 6 und die Oberwand 7 sind aus einem Blechzuschnitt hergestellt.

An der Seitenwand 5 ist ein Mitnehmerprofil 32 angeordnet. Das Mitnehmerprofil 32 weist einen nach außen hervorragenden Mitnehmer 30 für den nächstgrößeren, einen Gegenmitnehmer 31 aufweisenden, Abdeckkasten 4 auf. An jeder Seitenwand 5, 6 eines Abdeckkastens 2, 3 bzw. 4 ist ein Mitnehmerprofil 32 angeordnet. Wie aus der Figur 1 ersichtlich ist, ist das Mitnehmerprofil 32 mit einer Rückwand 38 verbunden.

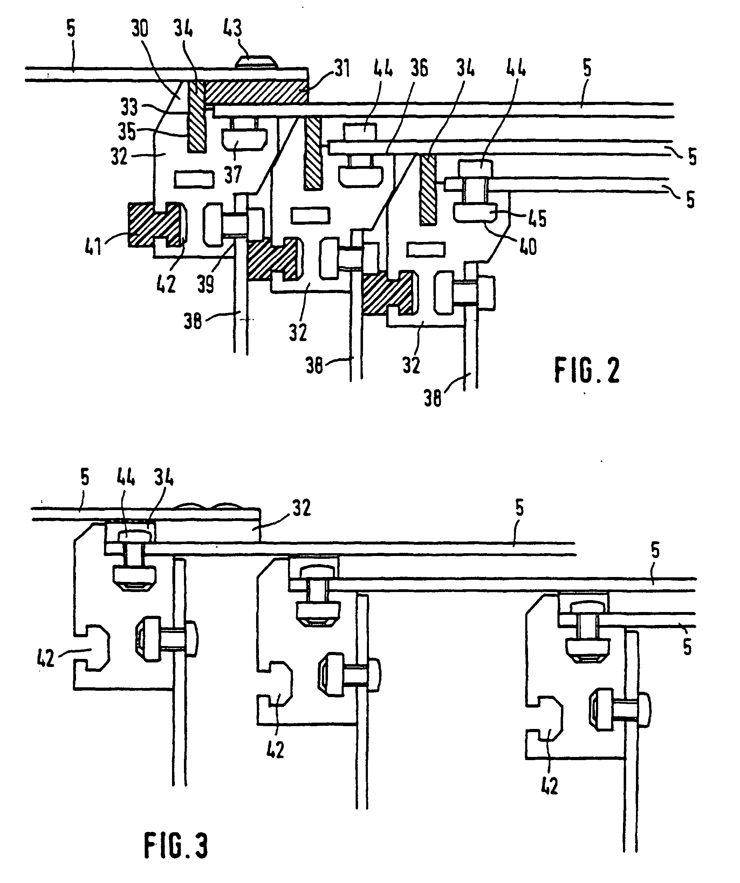

An der Mitnehmerfläche 33 des Mitnehmers 30 ist ein Dämpfungselement 34 angeordnet. Das Dämpfungselement 34 ist in einer im Mitnehmerprofil 32 ausgebildeten Nut 35 eingelegt. Wie aus den Figuren 1 und 2 ersichtlich ist, liegt der Gegenmitnehmer 31 beim Auseinanderziehen der Abdeckkästen 2, 3, 4 an dem Dämpfungselement 34 an. Der Gegenmitnehmer 31 ist mittels einer Schraube 43 mit der Seitenwand 5 des nächstgrößeren Abdeckkastens verbunden. Statt einer Schraube 43 kann der Gegenmitnehmer 31 auch mittels eines Niets verbunden sein. Der Gegenmitnehmer 31 ist in Form einer Leiste ausgebildet.

Jedes Profil 32 ist mittels Schrauben 44 mit der Seitenwand 5 verbunden. Die Schraube ist in einer Mutter 45 eingeschraubt, welche in einer T-förmigen Nut 40 angeordnet ist. Die T-förmige Nut 40 ist in der an der Seitenwand 5 anliegenden Fläche des Mitnehmerprofils 32 ausgebildet.

Sind die Abdeckkästen ineinandergeschoben, so liegt ein Anschlag 41 an der Rückwand 38 des nächstgrößeren Abdeckkastens an. Der Anschlag 41 ist in einer Anschlagnut 42 angeordnet. Die Anschlagnut 42 erstreckt sich in der Längsrichtung des Mitnehmerprofils 32.

In der Figur 3 ist ein zweites Ausführungsbeispiel eines Abdeckkastens dargestellt. Das an der Seitenwand 5 angeordnete Mitnehmerprofil 32 unterscheidet sich von dem in der Figur 2 dargestellten Mitnehmerprofil dadurch, daß dieses keine Nut für ein Dämpfungselement 34 aufweist. Das Dämpfungselement 34 ist mittels einer Schraube 44 an der Seitenwand 5 angeordnet.

Wir kommen zurück auf die Figur 1. Unmittelbar unterhalb der Oberwand 7 ist ein Profil 8 befestigt.

Das Profil 8 ist an der Oberwand 7 mittels Befestigungsmitteln 10 verbunden. Bei den Befestigungsmitteln 10 handelt es sich um Schrauben. Auf der Oberseite der Oberwand 7 sind Gleitstücke 11 angeordnet. Auf den Gleitstücken 11 gleitet die Unterseite der Oberwand 7 des nächstgrößeren Abdeckkastens. Die Gleitstücke 11 sind im Abstand zueinander angeordnet. Sie erstrecken sich jeweils nur über einen Teil der Breite der Oberwand 7, so daß eine von der Oberseite der Oberwand 7 abgestreifte Flüssigkeit zwischen den Gleitstücken 11 in die offene Rinne 9 abfließen kann. Die Gleitstücke 11 können z.B. aus Messing, Bronze oder Kunststoff bestehen. Die Gleitstücke 11 werden durch die Befestigungsmittel 10 mit der Oberwand 7 und dem Profil 8 verbunden.

Die Oberwand 7 weist Laschen auf, welche mit Bohrungen versehen sind, durch die sich die Befestigungsmittel 11 hindurch erstrecken. Der zwischen den Laschen bestehende Freiraum ist mit der offenen ersten Rinne 9 verbunden.

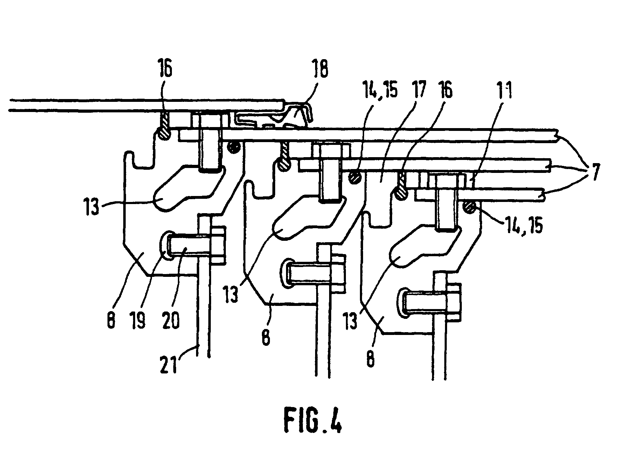

Die offene erste Rinne 9 ist in dem Profil 8 ausgebildet. Die erste Rinne 9 weist einen im wesentlichen rechteckförmigen Eintrittsabschnitt 12 auf, der in einem Sammelkanal 13 mündet. Wie aus den Fig. 1 und 4 ersichtlich ist, sind in dem Eintrittsbereich 12 Außengewinde ausgebildet, in welche die Schrauben eingeschraubt sind.

Zwischen der Unterseite der Oberwand 7 und dem Profil 8 ist eine Dichtung 14 angeordnet, welche in einer Nut 15 eingelegt ist. Die Nut 15 ist in dem Profil 8 ausgebildet.

Der ersten offenen Rinne 9 nachgeordnet ist ein Abstreifer 16, welcher an der Unterseite der Oberwand 7 des nächstgrößeren Abdeckkastens 2, 3, 4 anliegt. Das Profil weist eine zweite Rinne 17 auf, wobei der Abstreifer 16 zwischen der ersten Rinne 9 und der zweiten Rinne 17 angeordnet ist.

An dem dem Profil 8 gegenüberliegenden Ende der Oberwand 7 ist ein Abstreifer 18 vorgesehen, welcher auf der Oberseite der Oberwand 7 des nächstkleineren Abdeckkastens gleitet und die dort sich befindende Flüssigkeit und/oder Späne abstreift.

In dem Profil 8 ist eine Nut 19 ausgebildet, in welcher Schrauben 20 eingeschraubt sind. Die Schrauben 20 halten eine Rückwand 21, 38 an dem Profil 8. Statt des Profils 19 können gesonderte Bohrungen für Schrauben 20 in dem Profil 8 vorgesehen sein.

## Patentansprüche

1. Abdeckung für ein Maschinenbett einer Werkzeugmaschine mit teleskopartig ineinander schiebbaren Abdeckkästen (2, 3, 4), wobei jeder Abdeckkasten (2, 3, 4) eine erste (5) und eine zweite (6) Seitenwand und eine mit den Seitenwänden (5, 6) verbundene Oberwand (7) sowie wenigstens einen über eine Seitenwand (5, 6) nach außen hervorragenden Mitnehmer (30) für den nächst größeren, einen entsprechenden Gegenmitnehmer (31) aufweisenden, Abdeckkasten (2, 3, 4) umfaßt, **dadurch gekennzeichnet, daß** der Mitnehmer (30) an einem Mitnehmerprofil (32) ausgebildet ist, daß das Mitnehmerprofil (32) wenigstens in der an der Seitenwand (5, 6) anliegenden Fläche (36) eine sich in Längsrichtung des Mitnehmerprofils (32) erstreckende, wenigstens an einer Stirnseite des Mitnehmerprofils (32) offen T-förmige Nut (37) mit Absätzen aufweist, wobei das Mitnehmerprofil (32) mit der Seitenwand (4, 5) verschraubt ist und ein Kopf einer Schraube oder eine Mutter auf den Absätzen der Nut (37) liegt

2. Abdeckung nach Anspruch 1, **dadurch gekennzeichnet, daß** der Mitnehmer (30) eine Mitnehmerfläche (33) ausweist, an der ein Dämpfungselement (34) angeordnet ist.

3. Abdeckung nach Anspruch 2, **dadurch gekennzeichnet, daß** das Mitnehmerprofil (32) eine Nut (35) zur Aufnahme des Dämpfungselementes (34) aufweist.

4. Abdeckung nach Anspruch 2 oder 3, **dadurch gekennzeichnet, daß** das Dämpfungselement (34) sich über die gesamte Mitnehmerfläche (33) erstreckt.

5. Abdeckung nach einem der Ansprüche 2-4, **dadurch gekennzeichnet, daß** das Dämpfungselement (34) aus Filz besteht.

6. Abdeckung nach einem der Ansprüche 1 bis 5, wobei jeder Abdeckkasten (2, 3, 4) eine sich zwischen den Seitenwänden (5, 6) erstreckende Rückwand (38) aufweist, **dadurch gekennzeichnet, daß** die Rückwand (38) und eine Seitenwand (5, 6) durch das Mitnehmerprofil (32) miteinander verbunden sind, wobei das Mitnehmerprofil (32) wenigstens in der an der Rückwand (38) anliegenden Fläche eine sich in Längsrichtung des Mitnehmerprofils (32) erstreckende an einer Stirnseite des Mitnehmerprofils (32) offen T-förmige Nut (40) mit Absätzen aufweist, wobei das Mitnehmerprofil (32) mit der Rückwand (38) verschraubt ist und ein Kopf einer Schraube oder eine Mutter auf den Absätzen der Nut (40) liegt.

7. Abdeckung nach Anspruch 6, **dadurch gekennzeichnet, daß** wenigstens ein Anschlag (41) an dem Mitnehmerprofil (32) angeordnet ist, wobei der Anschlag (41) mit einem Mitnehmerprofil oder einer Rückwand des nächstgrößeren Abdeckkastens in Kontakt bringbar ist.

8. Abdeckung nach Anspruch 7, **dadurch gekennzeichnet, daß** der Anschlag (41) in einer im Mitnehmerprofil (32) ausgebildeten Anschlagnut (42) angeordnet ist.

## Claims

1. A cover for a machine bed of a machine tool, said cover comprising covering boxes (2, 3, 4) which can be pushed one inside another telescopically, wherein each covering box (2, 3, 4) comprises a first (5) and a second (6) side wall and a top wall (7) connected to the side walls (5, 6) and at least one catch (30) projecting outwards over a side wall (5, 6) for the next larger covering box (2, 3, 4), having a corresponding counter catch (31), **characterized in that** the catch (30) is configured on a catch profile (32), **in that** the catch profile (32) has at least in the surface (36) abutting against the side wall (5, 6) a T-shaped groove (37) with shoulders, which extends in a longitudinal direction of the catch profile (32) and which is open on at least one end face of the catch profile (32), wherein the catch profile (32) is screwed to the side wall (4, 5) and a head of a screw or a nut is lying on the shoulders of the groove (37).

2. The cover according to claim 1, **characterized in that** the catch (30) comprises a catch surface (33) on which a shock-absorbing element (34) is arranged.

3. The cover according to claim 2, **characterized in that** the catch profile (32) comprises a groove (35) for receiving the shock-absorbing element (34).

4. The cover according to claim 2 or 3, **characterized in that** the shock-absorbing element (34) extends over the entire catch surface (33).

5. The cover according to one of claims 2 to 4, **characterized in that** the shock-absorbing element (34) is made of felt.

6. The cover according to one of claims 1 to 5, wherein each covering box (2, 3, 4) comprises a rear wall (38) extending between the side walls (5, 6), **characterized in that** the rear wall (38) is joined to a side wall (5, 6) through the catch profile (32), wherein the catch profile (32) has at least in the surface abutting against the rear wall (38) a T-shaped groove (40) with shoulders, said T-shaped groove (40) extending in a longitudinal direction of the catch profile (32) and being open on one end face of the catch profile (32), wherein the catch profile (32) is screwed to the rear wall (38) and a head of a screw or a nut is laying on the shoulders of the groove (40).

7. The cover according to claim 6, **characterized in that** at least one stop (41) is arranged on the catch profile (32), wherein the stop (41) can be brought into contact with a catch profile or a rear wall of the next-larger covering box.

8. The cover according to claim 7, **characterized in that** the stop (41) is arranged in a stop groove (42) configured in the catch profile (32).

## Revendications

1. Elément de recouvrement pour un banc de machine d'une machine-outil comportant des caissons de recouvrement (2, 3, 4) pouvant coulisser les uns dans les autres de manière télescopique, chaque caisson de recouvrement (2, 3, 4) présentant une première (5) et une deuxième (6) paroi latérale et une paroi de dessus (7) reliée aux parois latérales (5, 6) ainsi qu'au moins un entraîneur (30) faisant saillie vers l'extérieur au-dessus d'une paroi latérale (5, 6) pour le caisson de recouvrement plus . grand suivant (2, 3, 4) présentant un contre-entraîneur (31) correspondant, **caractérisé en ce que** l'entraîneur (30) est réalisé sur un profilé d'entraîneur (32), **en ce que** le profilé d'entraîneur (32) présente au moins dans la surface (36) s'appuyant contre la paroi latérale (5, 6) une rainure en forme de « U » (37) avec des épaules, ladite rainure s'étendant en direction longitudinale du profilé d'entraîneur (32) et étant ouverte au moins sur une face frontale du profilé d'entraîneur (32), le profilé d'entraîneur (32) étant vissé à la paroi latérale (4, 5) et une tète d'une vis ou un écrou reposant sur les épaules de la rainure (37).

2. Elément de recouvrement selon la revendication 1, **caractérisé en ce que** l'entraîneur (30) présente une surface d'entraîneur (33) sur laquelle un élément d'amortissement (34) est agencé.

3. Elément de recouvrement selon la revendication 2, **caractérisé en ce que** le profilé d'entraîneur (32) présente une rainure (35) pour recevoir l'élément d'amortissement (34).

4. Elément de recouvrement selon la revendication 2 ou 3, **caractérisé en ce que** l'élément d'amortissement (34) s'étend sur toute la surface d'entraîneur (33).

5. Elément de recouvrement selon l'une des revendication 2 à 4, **caractérisé en ce que** l'élément d'amortissement (34) est composé de feutre.

6. Elément de recouvrement selon l'une des revendications 1 à 5, chaque caisson de recouvrement (2, 3, 4) présentant une paroi arrière (38) qui s'étend entre les parois latérales (5, 6), **caractérisé en ce que** la paroi arrière (38) et une paroi latérale (5, 6) sont reliées l'une à l'autre au moyen du profilé d'entraîneur (32), le profilé d'entraîneur (32) présentant au moins dans la surface s'appuyant contre la paroi arrière (38) une rainure (40) en forme de «T» avec des épaules, ladite rainure (40) s'étendant en direction longitudinale du profilé d'entraîneur (32) et étant ouverte sur une face frontale du profilé d'entraîneur (32), le profilé d'entraîneur (32) étant vissé à la paroi arrière (38) et une tète d'une vis ou un écrou reposant sur les épaules de la rainure (40).

7. Elément de recouvrement selon la revendication 6, **caractérisé en ce qu'**au moins une butée (41) est agencée sur le profilé d'entraîneur (32), la butée (41) pouvant être mise en contact avec un profilé d'entraîneur ou une paroi arrière du caisson de recouvrement plus grand suivant.

8. Elément de recouvrement selon la revendication 7, **caractérisé en ce que** la butée (41) est agencée dans une rainure de butée (42) réalisée dans le profilé d'entraîneur (32).
